**Europäisches Patentamt**

**European Patent Office**

**Office européen des brevets**

(19)

(11) **EP 1 646 009 A2**

(12) **EUROPÄISCHE PATENTANMELDUNG**

(43) Veröffentlichungstag:
**12.04.2006 Patentblatt 2006/15**

(51) Int Cl.:
*G06T 7/00* (2006.01)  *G01V 5/00* (2006.01)
*G01N 23/00* (2006.01)

(21) Anmeldenummer: **05022056.5**

(22) Anmeldetag: **10.10.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **08.10.2004 DE 102004049227**

(71) Anmelder: **YXLON International Security GmbH 22453 Hamburg (DE)**

(72) Erfinder:
• **Schmiegel, Armin, Dr.**
  **22609 Hamburg (DE)**
• **Schwarze, Marc**
  **21702 Ahlerstedt (DE)**

(74) Vertreter: **DTS München Patent- und Rechtsanwälte St.-Anna-Strasse 15 80538 München (DE)**

(54) **Verfahren zur Bestimmung der Lageänderung eines Objekts in einem Gepäckstück**

(57) Die Erfindung befasst sich mit einem Verfahren zur Bestimmung der Lageänderung eines Objekts (200, 210) in einem Gepäckstück (100) mittels zweier Röntgenbilder, wobei in jedem Röntgenbild einzelne Merkmalpunkte (1 - 15) zugeordnet werden und die Merkmale extrahiert werden, so dass jeweils eine Punktmenge resultiert; ein Suchen nach Clustern (130 bis 150) in jeder Punktmenge erfolgt; ein Bestimmen der Nachbarschaft in jedem Röntgenbild mittels einer Bewertungsfunktion erfolgt, die bei großer Nähe der Punkte (1 - 15) andere Werte aufweist als bei geringer Nähe der Punkte (1 - 15); und ein Analysieren der Bewegung des Objekts (210) durch Betrachtung der Nachbarschaften der Cluster (130 - 150) erfolgt.

Fig.3

EP 1 646 009 A2

Fig.4

**Beschreibung**

Die Erfindung befasst sich mit einem Verfahren zur Bestimmung der Lageänderung eines Objekts in einem Gepäckstück mittels zweier Röntgenbilder.

Es sind Röntgenprüfanlagen bekannt, die mittels geeigneter Verfahren die Lageänderung eines Gepäckstücks zwischen einer ersten Röntgenaufnahme (die regelmäßig in einer anderen Gepäckprüfanlage aufgenommen wurde) und einem zweiten Röntgenbild feststellen können. Diese Verfahren dienen dazu, dass im Zweitstufengerät nur noch die im Vorstufengerät erkannten Verdachtsregionen darauf untersucht werden müssen, ob darin gefährliche Gegenstände oder Stoffe enthalten sind. Damit wird eine bedeutende Einsparung an Zeit für das Prüfverfahren und somit eine erheblich höhere Durchsatzrate erzielt. Die Geräte können räumlich getrennt sein. Im Gegensatz zu anderen Anlagen kann es sich hier um zwei unterschiedliche Prüfgeräte an unterschiedlichen Standorten handeln. Über den Transport der Gepäckstücke wird ebenfalls keine Annahme getroffen. Die bekannten Verfahren beruhen darauf, dass innerhalb der Verdachtsregion eine Bildsegmentierung durchgeführt wird und die segmentierten Objekte im zweiten Röntgenbild ermittelt werden. Solche Verfahren scheitern jedoch häufig an der verzerrenden und transparenten Struktur der Röntgenbilder. Wenn die beiden bildgebenden Systeme sich auch noch in ihrer Geometrie voneinander unterscheiden, sind die Schwierigkeiten noch größer, da dann selbst bei einem starken Absorber die Amplitudenwerte in den Bildern nicht übereinstimmen. Hinzu kommen noch Verzerrungen im Bild, die von unterschiedlichen Perspektiven herrühren. Dies führt dazu, dass selbst die Topologie der Bilder der Objekte nicht notwendigerweise erhalten bleibt. So kann beispielsweise ein Zylinder in einem Bild als rechteckige Struktur, in einem zweiten Bild als runde Struktur abgebildet werden. Selbst in den Fällen, in denen die Lageänderung des Gepäckstücks korrekt bestimmt wird und somit die im ersten Röntgenbild festgestellte Verdachtsregion im zweiten Röntgenbild genau bestimmt ist, ergeben sich immer noch Probleme, wenn sich das verdächtige Objekt vor der Aufnahme des zweiten Röntgenbildes verschoben hat. In diesem Fall muss das gesamte Gepäckstück noch einmal vollständig überprüft werden, was zu einer Reduzierung der Durchsatzrate führt.

Aufgabe der Erfindung ist es somit, ein Verfahren zur Verfügung zu stellen, mit dem die Verschiebung eines Objekt innerhalb eines Gepäckstücks detektiert werden kann, um die zu untersuchende Verdachtsregion an den neuen Aufenthaltsort des Objekts anzupassen.

Die Aufgabe wird durch ein Verfahren mit den Merkmalen des Patentanspruchs 1 gelöst. Im Gegensatz zur klassischen Segmentierung von Objekten in Durchleuchtungsbildern, bei denen Kanten und Flächen mit vergleichbarer Amplitude oder hinreichender räumlicher Nähe zu einzelnen Objekten zusammengefasst werden, ist erfindungsgemäß vorgesehen, dass einzelnen Merkmalen Punkte zugeordnet werden. Als Merkmale dienen beispielsweise Ecken, die sich aus Flächeninformationen ableiten, dann aber unabhängig von der Änderung der Perspektive sind. Erfindungsgemäß werden dann diese Merkmale extrahiert. Die Extraktion dieser signifikanten Punkte basiert auf einer lokalen Gewichtung der Bildinformation. Das Ergebnis dieser Gewichtung dient dann dazu, mögliche Merkmalspunkte zu erkennen. Das Resultat der Analyse dieser Gewichtungsfunktion ist eine Menge von Punkten. Der Verfahrensschritt der Extraktion ist beispielsweise bekannt aus: Barbara Zitovä, Jaroslav Kautsky, Gabriele Peters, Jan Flusser, Robust detection of significant points in multiframe images, Pattern Recognition Letters 20. Für jedes der beiden Röntgenbilder wird somit eine Punktmenge erhalten, wobei jede dieser Punktmengen Bilder von Strahlen darstellen. Erfindungsgemäß wird dann zur Lageänderungsermittlung innerhalb jeder Punktmenge nach Clustern gesucht. Als Cluster werden Punkte definiert, die bzgl. einer Abstandsfunktion nah beieinander liegen. Die Abstandsfunktion dient hierbei als Gewichtungs- und Bewertungsfunktion (siehe hierzu: Marco Carcassoni und Edwin R. Hancock, Correspondence Matching with Modal Clusters, IEEE Transactions on Pattern Analysis and Machine Intelligence, Vol. 25, No. 12, December 2003). Es wird davon ausgegangen, dass Objekte eine Menge von Merkmalen erzeugen, deren Nachbarschaftsverhältnisse nach einer räumlichen Transformation erhalten bleiben. Dies gilt auch, wenn ein Objekt verschoben wurde, dagegen nicht bei Objekten, die keine feste Form aufweisen, wie beispielsweise Pulver oder Flüssigkeiten. Sind diese Stoffe jedoch in einem Behälter mit starren Außenwänden enthalten, bleiben auch hier die Nachbarschaftsverhältnisse konstant. Erfindungsgemäß erfolgt die Bestimmung der Nachbarschaft in jedem Röntgenbild mittels einer Bewertungsfunktion, die bei großer Nähe der Punkte andere Werte aufweist als bei einer geringen Nähe der Punkte. Erfindungsgemäß kann die Bewegung zweier Objekte zueinander durch das Analysieren mittels der Betrachtung der Nachbarschaften einzelner Cluster erfasst werden. Im Ergebnis kann somit durch das erfindungsgemäße Verfahren festgestellt werden, ob sich einzelne Cluster zueinander bewegt haben. Da die Cluster für parametrisierte Objekte stehen, ist dies gleichbedeutend damit, dass sich auch die Objekte zueinander bewegt haben. Dies führt dazu, dass man, wenn man ein Objekt aus einer Verdachtsregion im Vorstufenbild kennt, die Verschiebung dieses Objekts im Zweitstufenbild nachvollziehen kann und somit die neue Lage dieses Objekts genau kennt. Die mit dem Objekt gewanderte Verdachtsregion kann nun separat im Zweitstufengerät analysiert werden und es ist nicht nötig, das gesamte Gepäckstück noch einmal vollständig zu analysieren. Dadurch wird enorm Zeit eingespart, was zu einer höheren Durchsatzrate führt.

Eine vorteilhafte Weiterbildung der Erfindung sieht vor, dass die Röntgenbilder Durchleuchtungsbilder sind. Dies stellt die im überwiegenden Maße verwendeten Darstellungen bei Vorstufen- und Zweitstufengeräten dar, so dass das erfindungsgemäße Verfahren als Softwareimplementierung auf den bekannten Geräten verwendet werden kann.

Eine weitere vorteilhafte Weiterbildung der Erfindung sieht vor, dass die Punkte mittels einer globalen Transformation einander zugeordnet werden. Dies stellt ein einfaches Verfahren dar, die Änderung der Punkte zwischen dem Röntgenbild der Vorstufe und dem der Zweitstufe miteinander zu vergleichen und die Änderung nachzuvollziehen. Dabei wird zunächst die räumliche Bewegung des Gepäckstückes ermittelt, welches durch ein komplementäres Verfahren bestimmt wurde. Ist diese Transformation bekannt - sie besteht in der Regel aus einer Rotation des Gepäckstückes in der Förderbandebene, einer Translation und einer Drehung um 180˚ um die eigene Achse - kann die Projektion jedes einzelnen Merkmals im zweiten Bild errechnet werden. Hierbei ist darauf zu achten, dass aus den Merkmalspunkten nunmehr Flächen werden, da es sich hier um die Projektion eines Strahls handelt.

Eine weitere vorteilhafte Weiterbildung der Erfindung sieht vor, dass die Merkmale mittels eines Merkmalsfilters extrahiert werden. Dieser Merkmalsfilter bewertet die Nachbarschaft eines jeden Bildpunktes und liefert als Resultat eine Gewichtungsfunktion. Diese Funktion gibt für jeden einzelnen Bildpunkt an, inwieweit es sich bei diesem Bildpunkt um ein Merkmal, beispielsweise eine Ecke oder eine Kante, handelt.

Eine weitere vorteilhafte Weiterbildung der Erfindung sieht vor, dass eine Skalenanalyse erfolgt. Hierbei werden z.B. Kanten als Merkmalsfaktoren über mehrere Auflösungsstufen (so genannte Skalen) extrahiert, die sich somit als stabil erweisen. Die Auflösungsstufen werden durch Tiepassfilter, Diffusionsfilter, o.ä. ermittelt (siehe hierzu: Gareth Loy und Alexander Zelinsky, Fast Radial Symmetry for Detecting Points of Interest, IEEE Transactions on Pattern Analysis and Machine Intelligence, Vol. 25, No. 8, August 2003). Dadurch ist es möglich, die Fehleranfälligkeit bzw. Fehlzuordnungen und Rauschen zu reduzieren. Bevorzugt wird dabei, die Cluster in Subgruppen zu unterteilen und die Subgruppen einer Bewegungsanalyse zu unterziehen. Die Bewegungsanalyse vergleicht die detektierten Punkte in den Bildern des Erststufen- und Zweitstufengerätes. Durch Projektion (globale Transformation) der Punkte des Erststufengerätes in das Bild des Zweitstufengerätes wird die Bewegung dadurch ermittelt, dass die Differenz des projizierten Bildpunktes aus dem ersten Bild und des durch den Punktdetektor ermittelten Punkt des zweiten Bildes innerhalb eines vordefinierten Toleranzbereiches liegen muss. Ist dies nicht der Fall, wird dies als Bewegung definiert.

Eine weitere vorteilhafte Weiterbildung der Erfindung sieht vor, dass die zwei Röntgenbilder in zwei räumlich voneinander getrennten Prüfanlagen aufgenommen werden. Dadurch ist es möglich, das erfindungsgemäße Verfahren anzuwenden, wenn das erste Röntgenbild in einem Vorstufengerät aufgenommen wurde, das einen hohen Durchsatz ermöglicht und das zweite Röntgenbild in einer Zweitstufenanlage mit höherer Auflösung und geringerer Fehlerrate aufgenommen wird.

Eine weitere vorteilhafte Weiterbildung der Erfindung sieht vor, dass die zwei Röntgenbilder in einer einzigen Prüfanlage zu unterschiedlichen Zeitpunkten aufgenommen werden. Dadurch ist es möglich, dass ein Gepäckstück, bei dem eine Verdachtsregion festgestellt wird, in Stoßzeiten, in denen ein hoher Durchsatz erforderlich ist, aus der Prüfanlage ausgefördert werden kann und solange zurückgehalten wird, bis genügend Zeit zur Verfügung steht, eine eingehende Untersuchung der Verdachtsregion in derselben Prüfanlage durchzuführen. Dazu wird das Gepäckstück dann wieder in dieselbe Prüfanlage eingefördert, liegt dort dann aber regelmäßig anders als bei der ersten Untersuchung.

Weitere Einzelheiten und Vorteile der Erfindung sind anhand des in den Figuren dargestellten Ausführungsbeispiels näher erläutert. Es zeigen:

Figur 1 zwei Röntgenbilder desselben Gepäckstücks aus unterschiedlichen Prüfanlagen,

Figur 2 ein weiteres Gepäckstück mit unterschiedlichen Objekten, bei denen charakteristische Merkmale angegeben sind und diese charakteristischen Merkmale an unterschiedlichen Positionen in den beiden Röntgenbildern zu erkennen sind,

Figur 3 die Darstellung von Clustern innerhalb eines Gepäckstücks, wobei einer der Cluster verschoben wurde, und

Figur 4 zwei Nachbarschaftsmatrizen, wobei einer der Cluster in der rechten Darstellung gegenüber der linken Darstellung verschoben wurde.

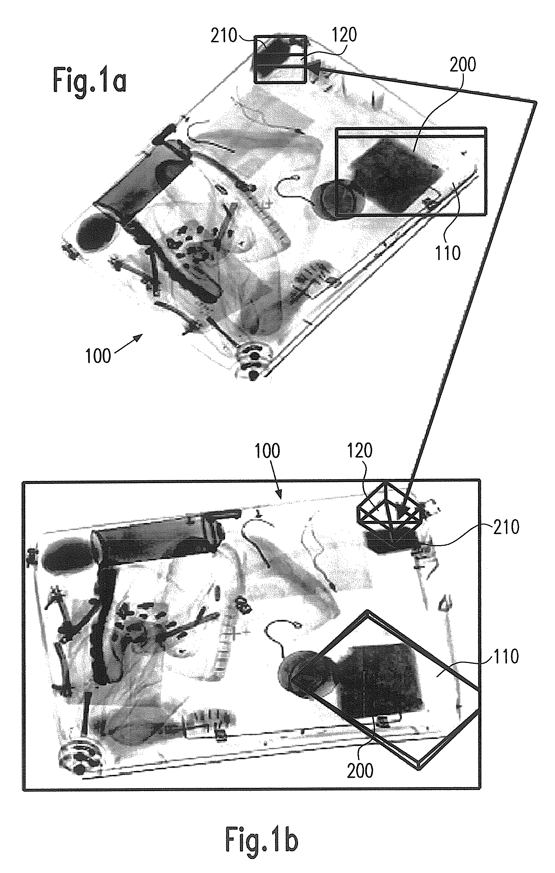

In Figur 1a ist ein Durchleuchtungsbild eines Gepäckstücks 100 dargestellt, das in einer ersten Gepäckprüfanlage mittels Röntgenstrahlen aufgenommen wurde. In diesem Röntgenbild wurde eine erste Verdachtsregion 110 mit einem ersten Objekt 200 und eine zweite Verdachtsregion 120 mit einem zweiten Objekt 210 gefunden. Bei den beiden verdächtigen Objekten 200, 210 könnte es sich beispielsweise um Sprengstoff enthaltende Objekte oder Waffen handeln. Um das Verdachtsmoment gegen die Objekte 200, 210 zu bestätigen bzw. zu widerlegen, die regelmäßig in einer Prüfanlage mit hohem Durchsatz und damit hoher Fehlerquote aufgenommenem werden, wird das Gepäckstück 100 zu einer zweiten Gepäckprüfanlage mit geringerem Gepäckdurchsatz, jedoch auch einer geringeren Fehlerquote befördert. Auf dem Weg dorthin ändert das Gepäckstück 100 regelmäßig seine Lage. Außerdem sind normalerweise die Aufnahmegeometrien zwischen dem Vorstufengerät und dem Zweitstufengerät unterschiedlich. Damit muss zuerst eine Feststellung der Lageänderung des Gepäckstücks 100 zwischen dem Vorstufengerät und dem Zweitstufengerät ermittelt werden. Da dieses Verfahren nicht relevant für die vorliegende Erfindung ist, wird darauf nicht näher eingegangen.

Die bekannten Verfahren zur Bewegung einzelner Objekte werden mittels einer klassischen Segmentierung von Objekten im Durchleuchtungsbild durchgeführt. Diese basieren darauf, dass Kanten und Flächen mit vergleichbarer Amplitude oder hinreichender räumlicher Nähe zu einzelnen Objekten zusammengefasst werden. Verdachtsobjekte werden regelmäßig durch ihre hohen Intensitäten und deren Ränder charakterisiert. Für Objekte im unteren Bereich des Gepäckstücks 100 in der Figur 1a ist eine solche Segmentierung jedoch nicht so einfach, da die Kanten kaum erkennbar sind und keine hohen Intensitäten und charakteristische Ränder zu erkennen sind. Darüber hinaus erschwert die Änderung in der Perspektive eine Zuordnung einzelner Objekte zueinander.

In Figur 1b ist ein Röntgendurchleuchtungsbild des Gepäckstücks 100 der Figur 1a in einer anderen Lage in einem Zweitstufengerät dargestellt. Aufgrund des nicht näher ausgeführten Verfahrens wurde die Lageänderung des Gepäckstücks 100 bestimmt und die beiden im Vorstufengerät ermittelten Verdachtsregionen 110, 120 übertragen. Das erste Objekt 200 hat seine Lage innerhalb des Gepäckstücks 100 nicht geändert und liegt somit weiterhin in der ersten Verdachtsregion 110. Eine genaue Untersuchung dieses ersten Objekts 200 ist deswegen sehr schnell durch die Überprüfung lediglich der ersten Verdachtsregion 110 möglich.

Dagegen liegt das zweite Objekt 210 nicht mehr vollständig in der zweiten Verdachtsregion 120, da es seine Lage innerhalb des Gepäckstücks 100 verändert hat. Dies ist insbesondere bei nicht dicht gepackten Gepäckstücken 100 durchaus möglich. Die nähere Untersuchung des zweiten Objekts 210 bezüglich seiner Gefährlichkeit, ist somit nicht mehr durch die Untersuchung lediglich der zweiten Verdachtsregion 120 möglich. Um Sicherheit über die Gefährlichkeit des zweiten Objekts 210 zu erhalten, muss das Gepäckstück 100 noch einmal vollständig analysiert werden. Dies ist jedoch äußerst zeitaufwändig und macht darüber hinaus die Erstanalyse mit Bestimmung der Verdachtsregionen 110, 120 im Vorstufengerät entbehrlich. In solchen Fällen ist es deswegen nötig, nicht nur die Verdachtsregionen 110, 120 zu bestimmen, sondern ob und ggf. wie die innerhalb der Verdachtsregionen 110, 120 befindlichen Objekte 200, 210 ihre Lage zwischen den beiden Prüfanlagen geändert haben.

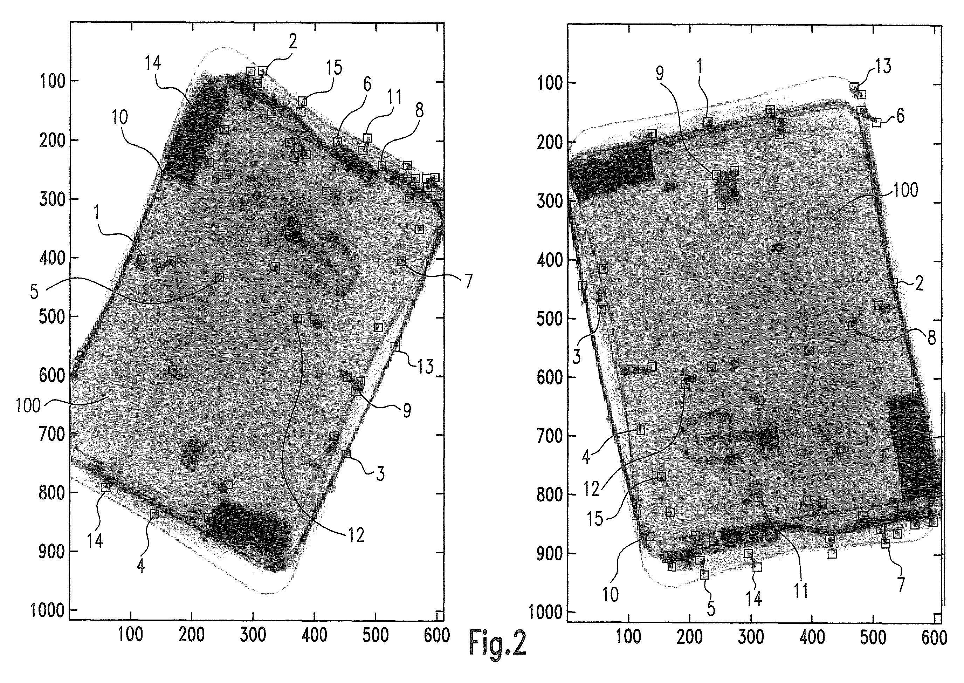

In der linken Darstellung der Figur 2 ist ein Röntgendurchleuchtungsbild eines Gepäckstücks 100 in einer ersten Prüfanlage dargestellt; dagegen zeigt die rechte Darstellung der Figur 2 dasselbe Gepäckstück 100 in einem Röntgendurchleuchtungsbild in einer zweiten Prüfanlage, wobei die Lage des Gepäckstücks 100 eine Änderung erfahren hat.

Erfindungsgemäß werden einzelnen Merkmalen, beispielsweise Ecken oder auch Kanten, die sich aus Flächeninformationen ableiten, Punkte 1 - 15 zugeordnet. Diese sind dann unabhängig von der Änderung der Perspektive festgelegt. Bei den Punkten 1 - 15 handelt es sich streng genommen um eine ganze Linie von hintereinander liegenden Punkten, die alle auf einem einzigen Strahl von der Röntgenquelle zum Detektor liegen. Die Merkmale werden anhand eines Merkmalfilters sowohl im Durchleuchtungsbild des Vorstufengerätes als auch im Durchleuchtungsbild des Zweitstufengeräts extrahiert. Hieraus resultiert dann jeweils pro Durchleuchtungsbild eine Punktmenge $\{X_i\}$ bzw. $\{Y_i\}$. Beide Mengen stellen jeweils Bilder von Strahlen dar. Durch die Bestimmung der globalen Transformation ist es möglich, die Punkte 1 - 15 aus dem einen Durchleuchtungsbild den Punkten 1 - 15 des anderen Durchleuchtungsbildes zuzuordnen. Dabei wird unterstellt, dass sich das Gepäckstück in der Förderbandebene verschoben oder gedreht hat. Weiterhin wird geprüft, ob sich das Gepäckstück umgedreht hat, d.h. ob die obere Seite nun unten und umgekehrt liegt. Ist diese Transformation bekannt, kann nun der Strahl, der jedem einzelnen Bildpunkt zugeordnet ist zurücktransformiert werden.

Ohne Umdrehen des Gepäckstückes lautet die Transformation dann:

$$TransformedRay_1 :=$$

$$\cos(\psi)\left(-(Xg - Ox)\lambda + (X - Ox)\mu\sim\right) + \sin(\psi)\left(-Yg + Y\right) + (Xg - Ox)\lambda + Ox + T_1$$

$$TransformedRay_2 :=$$

$$-\sin(\psi)\left(-(Xg - Ox)\lambda + (X - Ox)\mu\sim\right) + \cos(\psi)\left(-Yg + Y\right) + Yg + T_2$$

Dabei ist TransformedRay$_{1,2}$ die x,y Komponente des transformierten Bildpunktes. X,Y die Koordinaten des Bildpunktes im Ursprungsbild. $\psi$ stellt den Drehwinkel dar. $T_{1,2}$ die Translation des Koffers in der Förderbandebene. Xg, Yg bezeichnet das Bild eines Referenzpunktes, um den die Drehung erfolgt (in der Regel ist dies der Schwerpunkt des Bildes). Ox stellt die Position der Röntgenröhre dar. $\lambda$ und $\mu$ sind Laufparameter, die für die unbekannte Höhe des Referenzpunktes und die Punkte entlang des Strahles stehen.

Mit Umdrehen lautet die Transformation dann:

$$TransformedRay_1 := \cos(\psi)\,((Xg - Ox)\,\lambda - (X - Ox)\,\mu\sim) + \sin(\psi)\,(-Yg + Y)$$
$$+ Beltwidth - (Xg - Ox)\,\lambda - Ox + T_1$$

$$TransformedRay_2 := -\sin(\psi)\,((Xg - Ox)\,\lambda - (X - Ox)\,\mu\sim) + \cos(\psi)\,(-Yg + Y) + Yg + T_2$$

Beltwidth bezeichnet hierbei die Breite des Förderbandes. Die Nummerierung in den beiden Durchleuchtungsbildern ist willkürlich, so dass dieselbe Zahl nicht demselben Punkt entsprechen muss. Eine korrekte Zuordnung gelingt jedoch nur, wenn Subgruppen der Punkte 1 - 15 keine Lageänderungen erfahren haben. Unter Subgruppen werden eine Mehrzahl von Punkten 1 - 15 verstanden, die insbesondere nahe beieinander liegen.

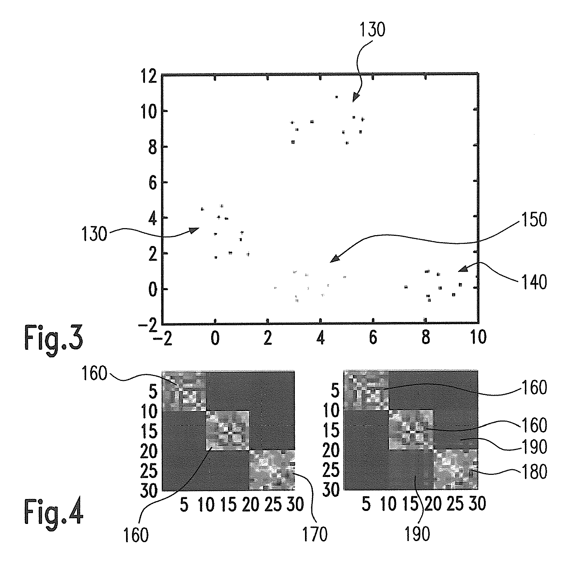

Der Nachweis einer Lageänderung eines Objekts 210 (Figur 1a, b) wird mittels der Darstellungen in den Figuren 3 und 4 verdeutlicht. Es wird hierbei davon ausgegangen, dass ein Objekt eine Menge von Merkmalen erzeugt, deren Nachbarschaftsverhältnisse auch nach einer räumlichen Transformation erhalten bleiben. Dies gilt auch dann, wenn das Objekt 210 verschoben wurde. Allerdings gilt dies nicht, wenn das Objekt 210 keine feste Form aufweist, wie dies beispielsweise bei einer Flüssigkeit in einer Plastiktüte der Fall ist. Die benötigten Nachbarschaftsverhältnisse können mit Hilfe einer Nachbarschaftsmatrix $H_{i,j} = f(x_i, y_j)$ bestimmt werden. Dabei stellt f eine Bewertungsfunktion dar, die bei einer großen Nähe der Punkte x, y hohe Werte und ansonsten niedrige Werte aufweist. Bei den angegebenen dreidimensionalen Punktkoordinaten ist berücksichtigt, dass die einzelnen Punkte 1 - 15 (Figur 2) Strahlen repräsentieren. Die in der vorgenannten Formel angegebenen Punkte x, y stellen hierbei Punkte dieser Strahlen dar.

In Figur 3 sind drei Cluster 130, 140 dargestellt, die die Merkmale von drei Objekten 200, 210 repräsentieren. Hierbei sind zwei Cluster 130 zu unverschobenen Objekten 200 dargestellt. Die zugehörigen Objekte 200 sind somit innerhalb des Gepäckstücks 100 zwischen der Aufnahme der beiden Durchleuchtungsbilder nicht verschoben worden. Dagegen ist das zweite Objekt 210, das durch die Cluster 140, 150 dargestellt ist, zwischen den Aufnahmen des ersten und zweiten Durchleuchtungsbildes innerhalb des Gepäckstücks 100 verschoben werden. Der unverschobene Cluster 140 stellt die Position im ersten Durchleuchtungsbild und der verschobene Cluster 150 die Position des zweiten Objekts 210 im zweiten Durchleuchtungsbild dar.

In Figur 4 sind zwei Nachbarschaftsmatrizen dargestellt, wobei die linke Matrix der Situation im Durchleuchtungsbild der Vorstufe (wie in Fig. 1a) entspricht und die rechte Matrix der Situation im Durchleuchtungsbild der Zweitstufe (wie in Fig. 1b). Entlang der Diagonalen von links oben nach rechts unten sind in beiden Matrizen jeweils drei Cluster, die jeweils zu einem der Cluster 130, 140 der Figur 3 gehören, zu erkennen. In der linken Matrix sind zwei Nachbarschaftsmatrizen 160 für unverschobene Objekte und eine Nachbarschaftsmatrix 170 für das verschobene Objekt 210 - allerdings vor der Verschiebung - dargestellt. Außerhalb der Diagonalen sind keine weiteren Terme zu erkennen, so dass dort nur dunkle Flächen gegeben sind. Je heller ein Abschnitt in der Matrix ist, desto näher sind die parametrisierten Punkte 1 - 15 der Figur 2 zueinander. In der rechten Matrix sind die drei, jeweils einem Objekt entsprechenden, Nachbarschaftsmatrizen 160, 180 unverändert zu ihren Pendants in der linken Matrix. Dies bedeutet, dass auch die Nachbarschaftsmatrix 180 des verschobenen Objekts 210 identisch ist mit der Nachbarschaftsmatrix 170 vor der Verschiebung. Im Ergebnis bedeutet dies, dass dasselbe Objekt vorliegt. Dies kann anhand der Verteilung der Helligkeit innerhalb der jeweiligen Nachbarschaftsmatrix 170, 180 erkannt werden. Darüber hinaus sind jedoch weitere Terme zwischen der Nachbarschaftsmatrix 180 des verschobenen Objekts und der mittleren Nachbarschaftsmatrix 170 zu erkennen. Diese Annäherungsmatrizen 190 sind heller in der rechten Matrix als in der linken Matrix zu erkennen. Dies bedeutet, dass das verschobene Objekt 210 (hierzu gehört die rechte untere helle Nachbarschaftsmatrix 180) näher an das Objekt, das seine Position nicht verändert hat (hierzu gehört die mittlere Nachbarschaftsmatrix 170), angenähert hat. In Figur 3 ist dies anhand der Entfernung zwischen dem linken unteren Cluster 130 und dem Cluster 140, 150 des verschobenen Objekts vor bzw. nach der Verschiebung zu erkennen. Um eine solche Darstellung zu erhalten, kann es notwendig sein, eine Eigenvektoranalyse der Nachbarschaftsmatrix durchzuführen. Die Eigenvektoren der Nachbarschaftsmatrix und ihre zugeordneten Eigenwerte liefern Informationen über die räumliche Nähe von Punkten (siehe hierzu: Marco Carcassoni und Edwin R. Hancock, Correspondence Matching with Modal Clusters, IEEE Transactions on Pattern Analysis and Machine Intelligence, Vol. 25, No. 12, December 2003).

Zusammenfassend kann also gesagt werden, dass es durch die Analyse der Annäherungsmatrix 190 möglich ist, Objekte zu erkennen, da diese durch Cluster 130, 140 repräsentiert werden. Die Analyse der Bewegungen eines Objekts kann durch Betrachtung der Nachbarschaften dieser Cluster 130, 140 erfolgen. Um die Fehleranfälligkeit bezüglich Fehlzuordnungen und das Rauschen zu reduzieren, kann eine Skalenanalyse erfolgen. Dabei werden die Cluster 130, 140 in Subgruppen unterteilt, die wiederum einer Bewegungsanalyse unterzogen werden.

Das erfindungsgemäße Verfahren ermöglicht es somit, Bewegungen einzelner Objekte 210, die sich innerhalb einer Verdachtsregion 120 befinden, zu detektieren und zu analysieren. Dadurch ist eine Anpassung des Untersuchungsbereichs innerhalb des Zweitstufengeräts möglich. Im Ergebnis führt dies dazu, dass im Gegensatz zu den bisherigen Verfahren nicht mehr das gesamte Gepäckstück 100 analysiert werden muss und somit eine deutliche Zeitersparnis gegeben ist, was sich in einer deutlich erhöhten Durchsatzrate niederschlägt.

Bezugszeichenliste

1 - 15 Punkte (Merkmale)
100 Gepäckstück
110 Erste Verdachtsregion
120 Zweite Verdachtsregion
130 Cluster zu unverschobenem Objekt
140 Cluster zu verschobenem Objekt vor der Verschiebung
150 Cluster zu verschobenem Objekt nach der Verschiebung
160 Nachbarschaftsmatrix für unverschobenes Objekt
170 Nachbarschaftsmatrix für verschobenes Objekt vor der Verschiebung
180 Nachbarschaftsmatrix für verschobenes Objekt nach der Verschiebung
190 Annäherungsmatrix
200 Erstes Objekt
210 Zweites Objekt

**Patentansprüche**

1. Verfahren zur Bestimmung der Lageänderung eines Objekts (200, 210) in einem Gepäckstück (100) mittels zweier Röntgenbilder,
   wobei in jedem Röntgenbild einzelnen Merkmalen Punkte (1 - 15) zugeordnet werden und die Merkmale extrahiert werden, so dass jeweils eine Punktmenge resultiert;
   ein Suchen nach Clustern (130 - 150) in jeder Punktmenge erfolgt;
   ein Bestimmen der Nachbarschaft in jedem Röntgenbild mittels einer Bewertungsfunktion erfolgt, die bei großer Nähe der Punkte (1 - 15) andere Werte aufweist als bei geringer Nähe der Punkte (1 - 15);
   ein Analysieren der Bewegung des Objekts (200) durch Betrachtung der Nachbarschaften der Cluster (130 - 150) erfolgt.

2. Verfahren zur Bestimmung der Lageänderung eines Objekts (200) in einem Gepäckstück (100) mittels zweier Röntgenbilder nach Patentanspruch 1, **dadurch gekennzeichnet, dass** die Röntgenbilder Durchleuchtungsbilder sind.

3. Verfahren zur Bestimmung der Lageänderung eines Objekts (200) in einem Gepäckstück (100) mittels zweier Röntgenbilder nach Patentanspruch 1 oder 2, **dadurch gekennzeichnet, dass** die Punkte (1 - 15) mittels einer globalen Transformation einander zugeordnet werden.

4. Verfahren zur Bestimmung der Lageänderung eines Objekts (200) in einem Gepäckstück (100) mittels zweier Röntgenbilder nach einem der Patentansprüche 1 bis 3, **dadurch gekennzeichnet, dass** die Merkmale mittels eines Merkmalfilters extrahiert werden.

5. Verfahren zur Bestimmung der Lageänderung eines Objekts (200) in einem Gepäckstück (100) mittels zweier Röntgenbilder nach einem der Patentansprüche 1 bis 4, **dadurch gekennzeichnet, dass** eine Skalenanalyse erfolgt.

6. Verfahren zur Bestimmung der Lageänderung eines Objekts (200) in einem Gepäckstück (100) mittels zweier Röntgenbilder nach Patentanspruch 5, **dadurch gekennzeichnet, dass** die Cluster (130 - 150) in Subgruppen unterteilt werden und die Subgruppen einer Bewegungsanalyse unterzogen werden.

7. Verfahren zur Bestimmung der Lageänderung eines Objekts (200) in einem Gepäckstück (100) mittels zweier Röntgenbilder nach einem der Patentansprüche 1 bis 6, **dadurch gekennzeichnet, dass** die zwei Röntgenbilder in zwei räumlich voneinander getrennten Prüfanlagen aufgenommen werden.

8. Verfahren zur Bestimmung der Lageänderung eines Objekts (200) in einem Gepäckstück (100) mittels zweier Röntgenbilder nach einem der Patentansprüche 1 bis 6, **dadurch gekennzeichnet, dass** die zwei Röntgenbilder in einer einzigen Prüfanlage zu unterschiedlichen Zeitpunkten aufgenommen werden.

Fig.1a

Fig.1b

Fig.2

Fig.3

Fig.4